# EUROPEAN PATENT SPECIFICATION

(11) **EP 2 908 622 B1**
(45) Date of publication and mention of the grant of the patent: **07.12.2016**
(21) Application number: 13784030.2
(22) Date of filing: 14.10.2013
(51) Int. Cl.: A01K 7/02

(54) **ANIMAL WATERING DEVICE AND METHOD OF CONTROLLING ANIMAL WATERING DEVICE**
TIERTRÄNKE UND VERFAHREN ZUR STEUERUNG EINER TIERTRÄNKE
DISPOSITIF D'ABREUVEMENT POUR ANIMAL ET PROCÉDÉ DE COMMANDE DU DISPOSITIF D'ABREUVEMENT POUR ANIMAL

(30) Priority: 17.10.2012 SE 1251181; 17.10.2012 US 201261714911 P; 17.10.2012 SE 1251179; 17.10.2012 US 201261714894 P
(43) Date of publication of application: 26.08.2015
(73) Proprietor: DeLaval Holding AB, 147 21 Tumba (SE)
(72) Inventor: TILLET, Nicolas, S-147 21 Tumba (SE); VAN DER POEL, Hans, S-147 21 Tumba (SE)
(74) Representative: Lilliehorn, Tobias
(86) International application number: PCT/SE2013/051200
(87) International publication number: WO 2014/062122

(56) References cited:
- DE-C1- 19 930 428
- DE-C1- 19 934 577
- SU-A1- 820 756
- US-A1- 2008 092 965
- US-A1- 2008 257 274
- US-A1- 2012 152 374
- US-A1- 2012 152 374

## Description

### TECHNICAL FIELD

The present invention relates to animal watering devices comprising a trough for holding water. The invention further concerns methods related to such animal watering devices.

### BACKGROUND

Animal watering devices are used for watering animals. Devices of various sizes are known. For animal watering devices in sizes suitable for e.g. livestock, horses, pigs, and sheep, i.e. animal watering devices not particularly directed to pets, it is desirable that the watering devices are automatically refilled. Since e.g. livestock will not drink soiled water, the watering device is preferably also automatically drained from soiled water.

US 2008/257274 discloses a watering device comprising a water fill assembly which fills a tank of the watering device when needed. Periodically the tank is drained. Soiled water is thus removed by draining.

US 5284173 discloses a self-draining, self-cleaning and self-replenishing apparatus for watering livestock. A bowl of the apparatus is periodically drained. Again, soiled water is removed by draining.

US 3921587 discloses a self filling and self cleaning water fountain for bovine animals. Water is dispensed into a water tank of the fountain adjacent an upper edge of interior sides to wash the sides during each water fill operation. The washing water urges any sediment or debris adjacent the sides into the body of water, wherein it will settle on the bottom of the tank. The surface of the bottom undulates so as to urge the settled sediment and debris to accumulate in the troughs of the bottom surface, formed by the undulations. Each trough is drained via a separate drain through which the accumulated settled sediment and debris is exhausted.

US 5813363 discloses an automatic dispenser for providing animals with cool fresh liquid (e.g., water). The feeder has self-cleaning and self-refilling features that provide periodic replacement of hot, stale or dirty fluid with cool fresh refills. Solenoid valves are controlled by one or more liquid sensors, a time delay relay, timer and optional thermostat to provide flexibility and customizing of drain/refill cycles as desired in order to reflect varying ambient conditions in which the equipment is operated.

US 2008/257274 discloses a self-cleaning, water-saving automated animal watering device which includes a watering tank moveable between a lower, water-full condition and an upper, water-low condition. One end of the tank is pivotally supported by a pivot shaft, while the other end of the tank is biased upwardly via a lower lift spring. The device also has a water fill assembly operably coupled with the tank to selectively fill the tank when needed, and a drain valve assembly also coupled with the tank in order to completely drain the tank on a periodic basis. A control assembly is coupled with at least the tank and drain valve assembly, and is operable to actuate the drain valve assembly after a predetermined number of movements of the tank between the elevated and lowered positions thereof.

Due to the periodic draining of these prior art devices, water is wasted e.g. since draining takes place irrespective of whether the water in the devices is soiled or not.

### SUMMARY

An object of the invention is to provide an animal watering device which is adapted to provide conditions for low waste of water.

According to an aspect of the invention, the object is achieved by an animal watering device comprising a trough for holding water, a water conduit system in fluid communication with the trough and arranged to be connected to a water supply, a water outlet arranged at a bottom portion of the trough, an outlet valve arrangement associated with the water outlet, and a water level control system. The water level control system comprises a controller, a timer, and a low level sensor arranged to sense a low water level in the trough. The timer is adapted to measure a first time interval and a second time interval. The water level control system is arranged to open the water outlet under a first condition, and under a second condition if failing to meet the first condition. The first condition is met when the first time interval has expired and a water level in the trough is below the low level sensor, and the second condition is met when the second time interval has expired.

Since the water level control system comprises a timer and a low water level sensor, and the water level control system is arranged to open the water outlet under the two conditions, the above mentioned object is achieved. Namely, when the first time interval has expired and a water level in the trough is below the low level sensor, it is ensured that the trough is drained when the water level in the trough is low. Moreover, if the first condition is not met, the second time interval will expire draining the trough if the water level in the trough is high due to the water therein being soiled to such a degree that animals will not drink from the trough. Thus, the trough may be drained primarily when the water level in the trough is low but a precaution against the trough containing soiled water above the low water level sensor is further achieved.

It has been realized by the inventors that willingness of animals to drink clean water and refusal to drink soiled water may be used for minimizing waste of water when draining an animal watering device, i.e. to drain soiled water in order to fill the trough with clean water. Thus, the controller may be set to open the water outlet by actuating the outlet valve arrangement only when a first time interval has expired and a water level in the trough is low. If the first time interval has expired and the water level in the trough is above the low level sensor, the trough is not drained and the animals may continue to drink water from the trough until the water level is below the low level sensor. Only then the trough is drained. If however, the water is soiled to such a degree that animals will not drink from the trough, an expiry of a second time interval may cause the controller to open the water outlet and drain the trough, despite there not being a low water level in the trough. Accordingly, under normal circumstances the first condition is more commonly met than the second condition.

The animal watering device may be of a size suitable for one animal only, or a number of animals simultaneously, drinking from its trough. The trough is a container which allows animals to drink therefrom. The animal watering device may comprise a support for the trough. The animal watering device may be placed indoors e.g. in an animal shed, or outdoors e.g. in a pasture. The animal watering device has to be connected to a water supply but other than that the animal watering device may be a stand-alone device. Alternatively, the animal watering device may be a built-in device of a construction such as a wall, a manger, or other feeding construction. The water outlet may be physically opened by the outlet valve arrangement, which may be controlled by the water level control system. The water supply may be provided e.g. by water mains, a built water reservoir, or a natural water reservoir such as a lake or a river. A pump may be utilized for pumping the water to the animal watering device. A main criterion for the water supply is that the water supplied is suitable for animals to drink.

The controller may be connected to the outlet valve arrangement to affect draining of the trough. The timer may be a separate timer or implemented as a function in the controller. The timer may comprise separate timer modules for measuring the first and second time intervals. The water level control system may be a distributed system in the sense that at least the low level sensor may be separate from the controller. The different parts of the water level control system may be connected with each other. The low level sensor may be used solely for the described draining of the trough. Alternatively, the low level sensor may additionally be used for indicating that there is a low water level in the trough, which requires replenishing.

According to embodiments, the timer may be adapted to be reset in connection with expiry of the first time interval and/or the second time interval. In this manner the timer may be reset in connection with emptying of the trough.
According to embodiments, the water conduit system may be connected to an inlet nozzle arrangement. In this manner the trough may be filled and replenished with water entering the trough via the inlet nozzle arrangement. The inlet nozzle arrangement may comprise one or more nozzles arranged in the trough. Opening and closing of the nozzles may be controlled by the water level control system.

According to embodiments, the inlet nozzle arrangement may comprise a first nozzle. In this manner the water may flow into the trough through the first nozzle.

According to embodiments, the inlet nozzle arrangement may comprise at least one second nozzle. In this manner the water may flow into the trough through the at least one second nozzle.

According to embodiments, the outlet valve arrangement may comprise a valve body and a hydraulic cylinder connected to the valve body. In this manner the hydraulic cylinder may be utilized to actuate the valve body for opening and closing the water outlet of the trough.

According to embodiments, the valve body may comprise a lid, the lid being provided to close the water outlet and being manoeuvred by the hydraulic cylinder. Since a lid provides a distinct opening and closing of the water outlet, it may be ensured that the outlet valve arrangement is not blocked or hampered in its function by debris from the trough being caught in the outlet valve arrangement.

According to embodiments, the water conduit system may be connected to the hydraulic cylinder. In this manner the outlet valve arrangement may be opened and closed by water pressure in the water conduit system. The controller may direct water to different chambers of the hydraulic cylinder, e.g. by means of one or more valves in the water conduit system.

According to embodiments, the water level control system may comprise a top level sensor arranged to sense a top water level in the trough. In this manner filling of the trough may be controlled. When the water reaches the top level sensor during filling of the trough, the inlet nozzle arrangement may be closed.

According to embodiments, the water level control system may comprise a middle level sensor arranged to sense a middle water level in the trough. The middle level sensor may be utilized e.g. for filling of the trough. When the water level is at or below the middle level sensor the trough may be replenished with water. If the middle level sensor is used in this manner, after expiry of the first time interval, the trough is not replenished with water when the water level in the trough is below the middle level sensor.

According to embodiments, the trough may comprise a bottom portion having a longitudinal direction and the bottom portion may be provided with a rib protruding from the bottom portion. The rib may be provided in a middle portion of the bottom portion and may extend substantially in the longitudinal direction. In this manner any debris in the water may deposit on both sides of the rib, which may facilitate draining of the debris from the trough.

According to embodiments, the rib may be provided in the middle portion of the bottom portion, seen both in the longitudinal direction and across the longitudinal direction such that the rib may protrude from the bottom portion and on all sides is surrounded by the bottom portion. In this manner water may flow along the bottom portion around the rib.

According to embodiments, the water outlet of the trough may be arranged at one end of the bottom portion.

According to embodiments, the bottom portion may be slanted towards the water outlet. In this manner the trough may be completely drained when the water outlet is opened.

According to embodiments, the first nozzle may be directed substantially in the longitudinal direction. In this manner the water may flow into the trough through the first nozzle and create a stream around the rib during draining of the trough through the water outlet. The rib at the bottom portion of the trough prevents forming of stagnant water in the middle of the trough. Such stagnant water could otherwise cause debris to remain in the trough during draining despite rinsing taking place. Thus, the rib ensures that a thorough rinsing of the trough may be achieved.

According to embodiments, the water level control system may be arranged to open the inlet nozzle arrangement when a water level in the trough is at or below the low level sensor. In this manner the trough may be replenished with water when there is a low water level in the trough.

According to embodiments, the water level control system may be arranged to open the inlet nozzle arrangement when a water level in the trough is at or below the middle level sensor. In this manner the trough may be replenished with water when there is a water level in the trough indicated by the middle level sensor.

According to embodiments, the water level control system may be arranged to maintain the water outlet open during a third time interval. In this manner it may be ensured that the trough is completely drained.

According to embodiments, the water level control system may be arranged to open the inlet nozzle arrangement during at least a part of the third time interval. In this manner the trough may be rinsed with clean water during draining of the trough.

According to embodiments, the animal watering device may comprise an electrically chargeable unit and an electric generator connected to the water conduit system. The electric generator may be arranged to be driven by water from the water supply and to charge the electrically chargeable unit. In this manner the animal watering system may be self-supporting at least to the extent that the water level control system does not require any external electric power source. The electrically chargeable unit may for instance be a rechargeable battery.

A further object of the invention is to provide a method of controlling an animal watering device, which method achieves low waste of water.

According to a further aspect of the invention, this object is achieved by a method of controlling an animal watering device according to aspects and/or embodiments mentioned herein, the method comprising:
measuring a first time interval with the timer,
sensing a water level with the low level sensor,
opening the water outlet if a first condition has been met, under which first condition the first time interval has expired and a water level in the trough is below the low level sensor, and if failing to meet the first condition
measuring a second time interval with the timer, and
opening the water outlet if a second condition has been met, under which second condition the second time interval has expired.

Since it is ensured that the trough is drained only when the water level in the trough is low or when the water is soiled to such a degree that animals refuse to drink it, as discussed above, the object is achieved.

According to embodiments, the method may comprise:
maintaining the water outlet open during a third time interval.

According to embodiments, the method may comprise:
opening the inlet nozzle arrangement during at least a part of the third time interval. In this manner debris collected on the bottom of the trough may be rinsed out through the water outlet by inflowing water.

According to embodiments, the method may comprise:
resetting the timer in connection with expiry of the first time interval and/or the second time interval. In this manner the timer may be reset in connection with draining the trough.

According to embodiments, the method may comprise:
opening the inlet nozzle arrangement when a water level in the trough is at or below the low level sensor. In this manner the trough may be replenished with water when there is a low water level in the trough.

According to embodiments, the method may comprise:
opening the inlet nozzle arrangement when a water level in the trough is at or below the middle level sensor. In this manner the trough may be replenished with water when there is a water level in the trough indicated by the middle water level sensor.

According to embodiments, the method may comprise:
closing the inlet nozzle arrangement when a water level in the trough is at or above the top level sensor.

According to embodiments, the hydraulic cylinder may comprise a first chamber, a second chamber, and piston forming a partition between the first and second chambers, the method may comprise:
connecting the first chamber via the water conduit system to the water supply to actuate the outlet valve arrangement. In this manner the piston may be displaced by water entering the first chamber, e.g. to open the water outlet of the trough. The piston is connected to the outlet valve arrangement, which thus may be opened.

According to embodiments, the method may comprise:
connecting the second chamber via the water conduit system to the water supply to actuate the outlet valve arrangement. In this manner the piston may be displaced by water entering the second chamber and the water outlet may be closed.

A further object of the invention is to provide an animal watering device with an alternative arrangement for removing debris from a trough of the animal watering device.

According to an aspect of the invention, the object is achieved by an animal watering device comprising a trough for holding water, the trough having a longitudinal direction and comprising a bottom portion. A water outlet is arranged at the bottom portion and an outlet valve arrangement is associated with the water outlet. The bottom portion is provided with a rib protruding from the bottom portion into the trough. The rib is provided in a middle portion of the bottom portion and extends substantially in the longitudinal direction of the trough.

Since any debris in the water may deposit on both sides of the rib, draining debris from the trough through the water outlet is improved. As a result, the object is achieved.

The animal watering device according to this aspect may comprise features of other aspects and/or embodiments disclosed herein.

Further features of, and advantages with, the present invention will become apparent when studying the appended claims and the following detailed description. Those skilled in the art will realize that different features of the present invention may be combined to create embodiments other than those described in the following, without departing from the scope of the present invention, as defined by the appended claims.

### BRIEF DESCRIPTION OF THE DRAWINGS

Various aspects of the invention, including its particular features and advantages, will be readily understood from the following detailed description and the accompanying drawings, in which:
Fig. 1 illustrates schematically a side view cross-section through an animal watering device according to embodiments,
Fig. 2 illustrates a cross-section through the animal watering device illustrated in Fig. 1,
Figs. 3a and 3b illustrate an outlet valve arrangement of an animal watering device according to embodiments, and
Fig. 4 illustrates a method of controlling an animal watering device as illustrated and discussed in connection with Figs. 1, 2, 3a and 3b.

### DETAILED DESCRIPTION

The present invention will now be described more fully with reference to the accompanying drawings, in which example embodiments are shown. However, this invention should not be construed as limited to the embodiments set forth herein. Disclosed features of example embodiments may be combined as readily understood by one of ordinary skill in the art to which this invention belongs. Like numbers refer to like elements throughout. Well-known functions or constructions will not necessarily be described in detail for brevity and/or clarity.

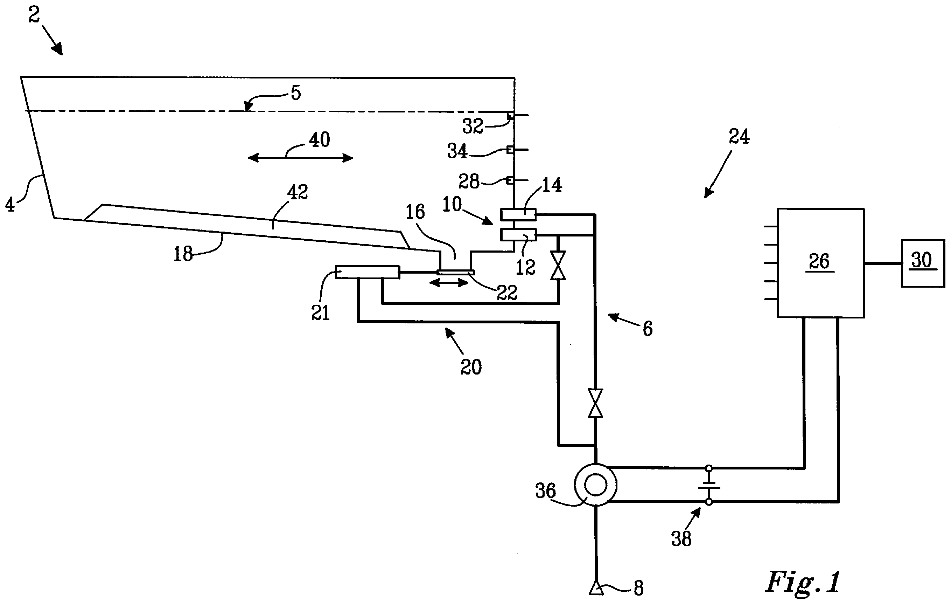

**Fig. 1** illustrates schematically a side view cross-section through an animal watering device 2 according to embodiments. The animal watering device 2 comprises a trough 4 for holding water as indicated by a water level 5. The animal watering device 2 also comprises a water conduit system 6 in fluid communication with the trough 4 and arranged to be connected to a water supply 8. Purely as an example it may be mentioned that the water pressure in the water conduit system 6 emanating from the water supply 8 may be about 1 bar, which pressure may be suitable e.g. for opening valves, setting hydraulic cylinders and filling or replenishing the trough 4. The water conduit system 6 is connected to an inlet nozzle arrangement 10. The inlet nozzle arrangement 10 may comprise one or more nozzles. In the illustrated embodiments the inlet nozzle arrangement 10 comprises a first nozzle 12 and a second nozzle 14. The inlet nozzle arrangement 10 is provided at the trough 4 such that the nozzle/s is/are directed into the trough 4 for admitting water through the nozzle/s into the trough 4.

The animal watering device 2 further comprises a water outlet 16 arranged at a bottom portion 18 of the trough 4, and an outlet valve arrangement 20 associated with the water outlet 16. The outlet valve arrangement 20 comprises a hydraulic cylinder 21 and a valve body 22. The hydraulic cylinder 21 is connected to the valve body 22. The hydraulic cylinder 21 is arranged to actuate the valve body 22 in order to open and close the water outlet 16. The water conduit system 6 is connected to the hydraulic cylinder 21. Thus, by directing water from the water supply to different chambers of the hydraulic cylinder 21, a piston of the hydraulic cylinder 21 may be actuated and the valve body 22 may be moved to open or close the water outlet 16.

A water level control system 24 is provided for controlling the animal watering device 2. For instance, filling and draining of the trough 4 may be controlled by the water level control system 24. The water level control system 24 comprises a controller 26, and a low level sensor 28 arranged to sense a low water level in the trough 4. That is, the low level sensor 28 is arranged inside the trough 4 and senses when the water level in the trough 4 is at or above the low level sensor 28. The controller 26 may for instance comprise a central processing unit running one or more control programs stored in a memory, discrete logic circuits, or a specifically designed ASIC (application-specific integrated circuit). The low level sensor 28 is connected to the controller 26. The controller 26 is further connected to one or more valves arranged in the water conduit system 6. The valves may be arranged to control water flow through the one or more nozzles of the inlet nozzle arrangement 10, control water directed to the chambers of the hydraulic cylinder 21, generally direct the flow of water in the water conduit system 6, etc. The controller 26 may control the valve/s based on signals from e.g. the low level sensor 28. For instance, the controller 26 may open a valve in the water conduit system 6 to replenish the trough 4 with water from the water source 8 through the water conduit system 6 and the nozzle inlet arrangement 10 when the water level 5 reaches the low level sensor 28.

The water level control system 24 further comprises a timer 30. The timer 30 may be a separate unit or in some embodiments it may be implemented directly in the controller 26, e.g. as one or more tasks programmed in the controller 26. The timer 30 may be utilized for measuring one or more time intervals. Such time intervals may be used e.g. in connection with draining, filling, and rinsing the trough 4. The water level control system 24 may be arranged to open the water outlet 16 by actuating the outlet valve arrangement 20 when a first time interval has expired in the timer 30 and a water level in the trough is at or below the low level sensor 28. A first condition of the water level control system 24 may be met if the first time interval has expired in the timer 30 and the water level in the trough is at or below the low level sensor 28. The first time interval may e.g. be 12 hours. Further, the water level control system 24 may be arranged to open the water outlet 16 by actuating the outlet valve arrangement 20 when a second time interval has expired. A second condition of the water level control system 24 may be met when the second time interval has expired. The second time interval always expires after the first time interval has expired. That is, if the second time interval is measured from the start of the first time interval, i.e. measuring of the first and second time intervals starts at the same time, the second time interval is longer that the first time interval. The second time interval would in this case normally be at least twice the length of the first time interval, and may e.g. be 24 hours. If the second time interval is measured from the end of the first time interval, the second time interval succeeds the first time interval. If measuring of the second time interval starts within the first time interval, the second time interval ends after the first time interval ends. The timer 30 may be reset e.g. in connection with draining the trough, e.g. when the water outlet 16 is opened or when the water outlet 16 is closed again after having been open, i.e. the timer 30 may be reset in connection with the expiry of the first time interval and the expiry of the second time interval. The time intervals will of course depend on the amount of animals drinking from the same trough, the size of the trough, the environmental conditions, etc., so the above mentioned time intervals should only be regarded as examples.

The water level control system 24 further comprises a top level sensor 32 and a middle level sensor 34. The top level sensor 32 is arranged to sense a top water level in the trough 4. That is, the top level sensor 32 is arranged inside the trough 4 and senses when the water level in the trough 4 is at or above the top level sensor 32. The middle level sensor 34 is arranged to sense a middle water level in the trough 4. That is, the middle level sensor 34 is arranged inside the trough 4 and senses when the water level in the trough 4 is at or above the middle sensor 34. The second and middle level sensors 32, 34 are connected to the controller 26.

The animal watering device 2 comprises an electric generator 36 connected to an electrically chargeable unit 38. The electric generator 36 and electrically chargeable unit 38 form part of an electric power unit. The electric generator 36 is connected to the water conduit system 6, and is thus driven by water from the water supply flowing through the conduit system 6. Accordingly, the electric generator 36 comprises a rotor, which is driven by the water flowing in the water conduit system 6. The electric generator 36 is arranged to charge the electrically chargeable unit 38. The electrically chargeable unit 38 may comprise e.g. a chargeable battery. The electrically chargeable unit 38 is connected to the water level control system 24. Electric power from the electrically chargeable unit 38 may thus power an electric power consuming device of the animal watering device 2 such as a valve or the water level control system 24, in particular components of the water level control system 24, e.g. the controller 26, and sensors 28, 32, 34.

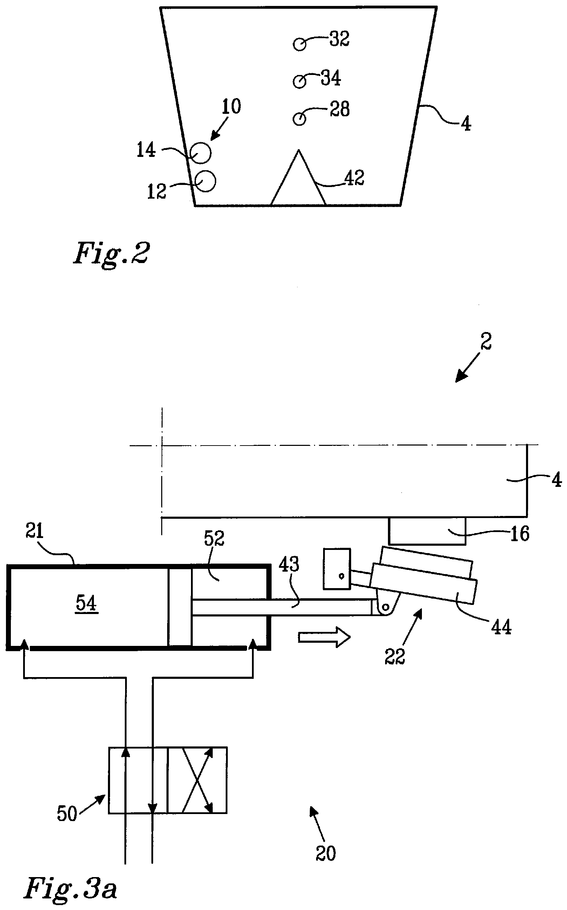

The trough 4 comprises the bottom portion 18. The trough 4 and the bottom portion 18 have a longitudinal direction 40. The longitudinal direction 40 extends along the longer of the two horizontal directions of the through 4. The water outlet 16 of the trough 4 is arranged at one end of the bottom portion 18, seen in the longitudinal direction 40. The bottom portion 18 is slanted towards the water outlet 16. Thus, it may be ensured that the trough 4 is completely drained when the water outlet 16 is opened. The bottom portion 18 is provided with a rib 42 protruding upwardly from the bottom portion 18. The rib 42 is provided in a middle portion of the bottom portion 18, seen both along and across the longitudinal direction 40. The rib 42 extends substantially in the longitudinal direction 40. Purely mentioned as an example, the trough 4 may be 2 metres long in the longitudinal direction 40, 60 cm wide, i.e. across the longitudinal direction 40, and 30 cm deep at its deep end. In a trough of such dimensions, the rib 42 may for instance have a length of 120 - 180 cm, a width of 0,5 - 25 cm close to the bottom portion 18, and a height of 3 - 10 cm. The rib 42 may have a wide base and a narrow top, e.g. as illustrated in Fig. 2.

Fig. 2 illustrates a cross-section through the animal watering device 2 illustrated in Fig. 1, across the longitudinal direction 40. The nozzle arrangement 10 is arranged at one inner side of the trough 4. At least the first nozzle 12 of nozzle arrangement 10 is directed substantially in the longitudinal direction 40. Thus, water flowing into the trough 4 through the first nozzle 12 will be directed substantially in the longitudinal direction 40. Due to the arrangement of the rib 42 in the middle portion of the bottom portion 18 inflowing water from the first nozzle 12 will form a stream of water around the rib 42 to the water outlet 16. Purely as an example it may be mentioned that a water pressure of about 1,5 bar in the water conduit system 6 will ensure a strong stream around the rib 42 in a trough of the above exemplified size. When the water outlet 16 is open and the trough 4 is being drained, the water stream will ensure that debris is flushed out from the trough 4. Accordingly, the water outlet 16 may be opened during a third time interval (which may e.g. be between one and two minutes) and the water level control system 24 may be arranged to open the inlet nozzle arrangement 10 during at least a part of the third time interval. In this manner the trough 4 may be rinsed with clean water during draining of the trough 4. Furthermore, due to the rib 42 there is no stagnant water, and accordingly also no debris, at the middle portion of the bottom portion 18 as the water flows from the first nozzle 12 to the water outlet 16.

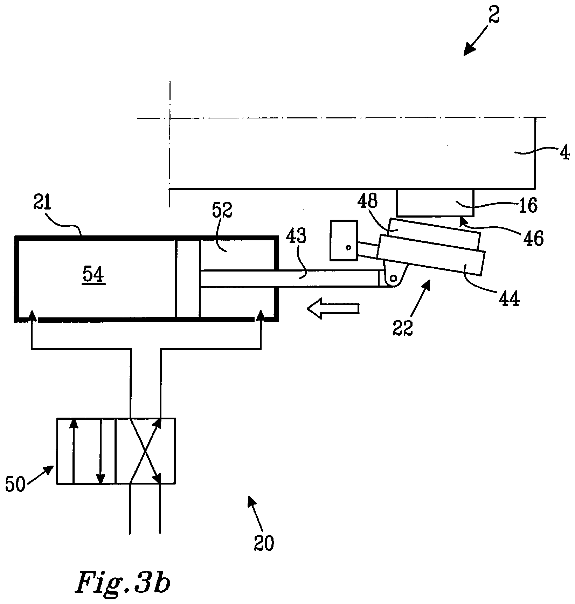

Figs. 3a and 3b illustrate an outlet valve arrangement 20 of an animal watering device 2 according to embodiments. The animal watering device 2 may be an animal watering device 2 as illustrated and discussed in connection with Figs. 1 and 2. The animal watering device 2 comprises a trough 4. The trough 4 is provided with a water outlet 16 arranged at a bottom portion of the trough 4. The outlet valve arrangement 20 is associated with the water outlet 16 and e.g. arranged for opening and closing the water outlet 16 and comprises a valve body 22 and a hydraulic cylinder 21 connected to the valve body 22. More specifically, a piston 43 of the hydraulic cylinder 21 is connected to the valve body 22. The valve body 22 comprises a lid 44 which is pivotably connected to the animal watering device 2. The lid 44 is arranged to close the water outlet 16. Accordingly, the lid 44 may be manoeuvred by the hydraulic cylinder 21. The lid 44 is arranged to abut against a rim 46 of the water outlet 16. The lid 44 may be provided with a rubber mat 48 which abuts against the rim 46 when the water outlet 16 is closed by the lid 44. The lid 44 provides a distinct opening and closing of the water outlet 16. Also, the arrangement of the lid 44 and the water outlet 16 being formed by an opening sufficiently large to permit debris in the form of straws and grass to flow out there through ensures that the outlet valve arrangement is not blocked or hampered in its function by such debris. Provided purely as an example, the water outlet 16 may have a through flow area of at least 200 mm², and the water outlet 16 may suitably be free from obstacles to ensure draining of debris.

The hydraulic cylinder 21 of the outlet valve arrangement 20 is connected to a water conduit system 6. The hydraulic cylinder 21 may thus be driven by the water pressure in the water conduit system 6. A control valve 50 of the outlet valve arrangement 20 for directing water from the water supply 8 to either one of two chambers 52, 54 of the hydraulic cylinder 21 is arranged in the water conduit system 6. Water from the respective chamber 52, 54 not being connected to the water supply 8 may be drained or directed into the trough 4. The two chambers 52, 54 are separated by the piston 43. The animal watering device 2 may comprise a water level control system as discussed in connection with Figs. 1 and 2. The water level control system may be connected to the control valve 50 of the outlet valve arrangement 20. The water level control system thus may open and close the water outlet 16 by means of controlling the control valve 50 to direct water into one of the two chambers 52, 54 of the hydraulic cylinder 21. The outlet valve arrangement 20 may form an electric power consuming device connected to the electrically chargeable unit 38. More specifically the control valve 50 may form an electric power consuming device.

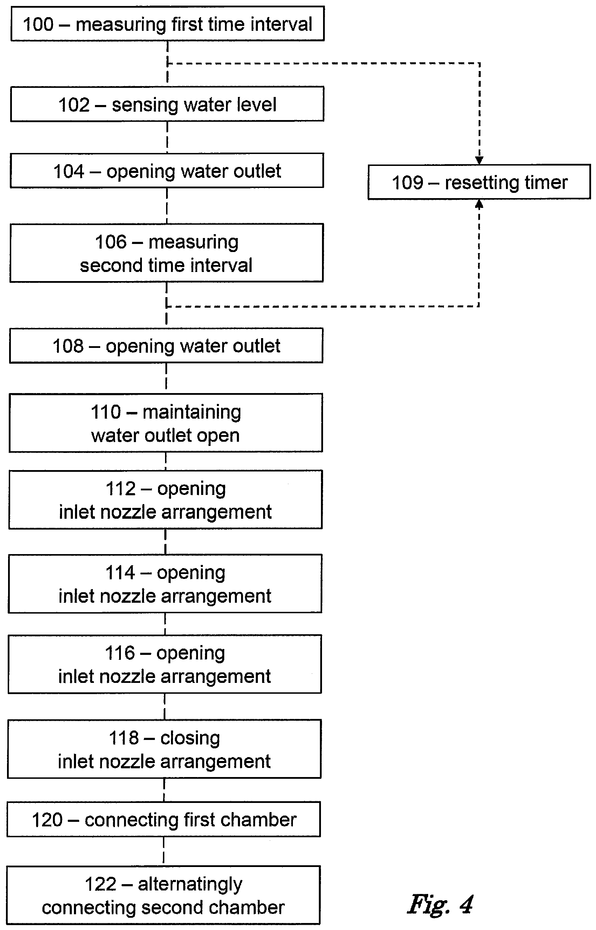

Fig. 4 illustrates a method of controlling an animal watering device 2 as illustrated and discussed in connection with Figs. 1, 2, 3a and 3b.
The method comprises:
measuring 100 a first time interval with the timer 30,
sensing 102 a water level with the low level sensor 28,
opening 104 the water outlet 16 if a first condition has been met, under which first condition the first time interval has expired and a water level in the trough 4 is at or below the low level sensor 28.
Accordingly, the water level control system 24 may be set to open the water outlet 16 only when a first time interval has expired and a water level in the trough 4 is low. Should the first time interval expire when the water level in the trough 4 is above the low level sensor 28, the trough 4 is not drained. Thus, animals may continue to drink water from the trough 4 until the water level is at or below the low level sensor 4. Only then the trough 4 is drained.

The method further comprises:
measuring 106 a second time interval with timer 30, and
opening 108 the water outlet 16 if a second condition has been met, under which second condition the second time interval has expired.
Accordingly, if the water is soiled to such a degree that animals will not drink from the trough 4 in any event, at expiry of the second time interval the water level control system 24 will open the water outlet 16 and drain the trough 4. The second time interval may e.g. be measured from the start of the first time interval or from the end of the first time interval. It is preferably substantially longer than the first time interval.

According to embodiments, the method may comprise:
maintaining 110 the water outlet 16 open during a third time interval. It may thus be ensured that the trough 4 is emptied. The length of the third time interval is chosen based on the capacity of the trough 4 and size of the water outlet 16. The third time interval is preferably substantially shorter than the first time interval.

According to embodiments, the method may comprise:
opening 112 the inlet nozzle arrangement 10 during at least a part of the third time interval. Water flowing into the trough 4 will thus rinse the trough 4, e.g. to remove debris and/or to ensure that soiled water is rinsed out of the trough 4.

According to embodiments, the method may comprise:
resetting 109 the timer 30 in connection with expiry of the first time interval and/or the second time interval.

According to embodiments, the method may comprise:
opening 114 the inlet nozzle arrangement 10 when a water level in the trough 4 is at or below the low level sensor 28.

According to embodiments, the method may comprise:
opening 116 the inlet nozzle arrangement 10 when a water level in the trough 4 is at or below the middle level sensor 34.

According to embodiments, the method may comprise:
closing 118 the inlet nozzle arrangement 10 when a water level in the trough 4 is at or above the top level sensor 32.

Accordingly, filling or replenishing the trough 4 may be based on a water level sensed by the low level sensor 28. When the water level in the trough 4 is at or below the low level sensor, the inlet nozzle arrangement 10 may be opened. The inlet nozzle arrangement 10 may be maintained open during a time interval of predetermined length. Alternatively, the inlet nozzle arrangement 10 may be closed when the water level in the trough 4 reaches the top level sensor 32, as mentioned above. If the water level control system 24 comprises a middle level sensor 34 arranged to sense a middle water level in the trough 4, the trough 4 may instead be filled or replenished by opening the inlet nozzle arrangement 10 when the water level is at or below the middle level sensor 34, as mentioned above. Again, the inlet nozzle arrangement 10 may be maintained open during a time interval of predetermined length or the inlet nozzle arrangement 10 may be closed when the water level in the trough 4 reaches the top level sensor 32. If the water level control system 24 comprises a middle level sensor 34 used in this manner, after expiry of the first time interval, the sensor signal from the middle level sensor 34 is ignored by the water level control system 24. Thus, the trough 4 is not replenished with water when the water level in the trough 4 is below the middle level sensor 34. The opening 104 the water outlet 16 will take place once the water level in the trough 4 reaches the low level sensor 28, or after expiry of the second time interval.

The method may comprise:
connecting 120 the first chamber 52 of the hydraulic cylinder 21 via the water conduit system 6 to the water supply 8 to actuate the outlet valve arrangement 20. Thus, the piston 43 of the hydraulic cylinder 21 may be displaced by water entering the first chamber 52. By the displacement of the piston 43 the water outlet 16 of the through 4 is opened.

According to embodiments, the method may comprise:
connecting 122 the second chamber 54 via the water conduit system 5 to the water supply 8 to actuate the outlet valve arrangement 20. Thus, the piston 43 of the hydraulic cylinder 21 may be displaced by water entering the second chamber 54. By the displacement of the piston 43 the water outlet 16 of the through 4 is closed.

Example embodiments described above may be combined as understood by a person skilled in the art. Herein the terms filling and replenishing have the same practical meaning. It is also understood by those skilled in the art that the length of the first and second time intervals may be adapted to specific circumstances, which may e.g. take into account the volume of the trough, the number of animals being watered, the number of troughs available for watering the number of animals, environmental conditions such as presence of straws and dirt, the location of the trough, etc. As previously mentioned the pressure in the conduit system 6 may be e.g. 1 bar or 1,5 bar. The pressure in the conduit system 6 emanating from the water supply 8 may alternatively be e.g. 2 - 3 bar or higher. The first nozzle 12 may be arranged below the one or more second nozzles 14 as illustrated in Figs 1 and 2. Alternatively, the first nozzle may be arranged above the one or more second nozzles 14, or amidst one or more second nozzles 14, or laterally beside the one or more second nozzles 14. Although the invention has been described with reference to example embodiments, many different alterations, modifications and the like will become apparent for those skilled in the art. Therefore, it is to be understood that the foregoing is illustrative of various example embodiments and that the invention is defined only by the appended claims.

As used herein, the term "comprising" or "comprises" is open-ended, and includes one or more stated features, elements, steps, components or functions but does not preclude the presence or addition of one or more other features, elements, steps, components, functions or groups thereof.

It will be understood that when an element is referred to as "connected" to another element, it can be directly on, coupled or connected to the other element or intervening elements may also be present. In contrast, when an element would be referred to as being "directly connected" to another element, there are no intervening elements present.

## Claims

1. An animal watering device (2) comprising a trough (4) for holding water, a water conduit system (6) in fluid communication with the trough (4) and arranged to be connected to a water supply (8), a water outlet (16) arranged at a bottom portion (18) of the trough (4), an outlet valve arrangement (20) associated with the water outlet (16), and a water level control system (24),
**characterized in that** the water level control system (24) comprises a controller (26), a timer (30), and a low level sensor (28) arranged to sense a low water level in the trough (4), wherein the timer (30) is adapted to measure a first time interval and a second time interval, wherein the water level control system (24) is arranged to open the water outlet (16) under a first condition, and under a second condition if failing to meet the first condition, wherein the first condition is met when the first time interval has expired and a water level in the trough (4) is at or below the low level sensor (28), and wherein the second condition is met when the second time interval has expired.

2. The animal watering device (2) according to claim 1, wherein the timer (30) is adapted to be reset in connection with expiry of the first time interval and/or the second time interval.

3. The animal watering device (2) according to claim 1 or 2, wherein the water conduit system (6) is connected to an inlet nozzle arrangement (10), comprising a first nozzle (12) and at least one second nozzle (14).

4. The animal watering device (2) according to any one of the preceding claims, wherein the outlet valve arrangement (20) comprises a valve body (22) and a hydraulic cylinder (21) connected to the valve body (22), and the water conduit system (6) is connected to the hydraulic cylinder (21).

5. The animal watering device (2) according to any one of the preceding claims, wherein the trough (4) comprises a bottom portion (18) having a longitudinal direction (40) and the bottom portion (18) is provided with a rib (42) protruding from the bottom portion (18), the rib (42) being provided in a middle portion of the bottom portion (18) and extending substantially in the longitudinal direction (40).

6. The animal watering device (2) according to claim 5, wherein the rib (42) is provided in the middle portion of the bottom portion (18) seen both in the longitudinal direction (40) and across the longitudinal direction (40) such that the rib (42) protrudes from the bottom portion (18) and on all sides is surrounded by the bottom portion (18).

7. The animal watering device (2) according to claim 5 or 6, wherein the water outlet (16) of the trough (4) is arranged at one end of the bottom portion (18), which is slanted towards the water outlet (16).

8. The animal watering device (2) according to any one of claims 5-7, wherein the water conduit system (6) is connected to an inlet nozzle arrangement (10) comprising a first nozzle (12), and the first nozzle (12) is directed substantially in the longitudinal direction (40).

9. The animal watering device (2) according to any one of the preceding claims, comprising an electrically chargeable unit (38) and an electric generator (36) connected to the water conduit system (6), the electric generator (36) being arranged to be driven by water from the water supply (8) and to charge the electrically chargeable unit (38).

10. A method of controlling an animal watering device (2) according to any one of the preceding claims, the method comprising:
measuring (100) a first time interval with the timer (30),
sensing (102) a water level with the low level sensor (28),
opening (104) the water outlet (16) if a first condition has been met, under which first condition the first time interval has expired and a water level in the trough (4) is at or below the low level sensor (28), and if failing to meet the first condition measuring (106) a second time interval with the timer (30), and
opening (108) the water outlet (16) if a second condition has been met, under which second condition the second time interval has expired.

11. The method according to claim 10, comprising:
resetting (109) the timer (30) in connection with expiry of the first time interval and/or the second time interval.

12. The method according to claim 10 or 11 applied in an animal watering device (2) wherein the water conduit system (6) is connected to an inlet nozzle arrangement (10), the method comprising:
maintaining (110) the water outlet (16) open during a third time interval, and
opening (112) the inlet nozzle arrangement (10) during at least a part of the third time interval.

13. The method according to any one of claims 10-12 applied in an animal watering device (2) wherein the water conduit system (6) is connected to an inlet nozzle arrangement (10), the method comprising:
opening (114) the inlet nozzle arrangement (10) when a water level in the trough (4) is at or below the low level sensor (28).

14. The method according to any one of claims 10 - 13 applied in an animal watering device (2) wherein the water conduit system (6) is connected to an inlet nozzle arrangement (10) and the water level control system (24) comprises a middle level sensor (34) arranged to sense a middle water level in the trough (4), the method comprising:
opening (116) the inlet nozzle arrangement (10) when a water level in the trough (4) is at or below the middle level sensor (34).

15. The method according to any one of claims 10 - 14 applied in an animal watering device (2) wherein the water conduit system (6) is connected to an inlet nozzle arrangement (10) and the water level control system (24) comprises a top level sensor (32) arranged to sense a top water level in the trough (4), the method comprising:
closing (118) the inlet nozzle arrangement (10) when a water level in the trough (4) is at or above the top level sensor (32).

## Patentansprüche

1. Tiertränke (2), umfassend einen Trog (4) zum Halten von Wasser, ein Wasserleitungssystem (6) in Flüssigkeitsverbindung mit dem Trog (4) und angeordnet, mit einer Wasserversorgung (8) verbunden zu werden, einen Wasserauslass (16), welcher an einem Bodenabschnitt (18) des Trogs (4) angeordnet ist, eine Auslassventilanordnung (20), die dem Wasserauslass (16) zugeordnet ist, und ein Wasserpegel-Steuerungssystem (24),
**dadurch gekennzeichnet, dass** das Wasserpegel-Steuerungssystem (24) einen Controller (26), einen Zeitgeber (30) und einen Niedrigpegel-Sensor (28) umfasst, der angeordnet ist, einen niedrigen Wasserpegel in dem Trog (4) zu erfassen, wobei der Zeitgeber (30) ausgelegt ist, ein erstes Zeitintervall und ein zweites Zeitintervall zu messen, wobei das Wasserpegel-Steuerungssystem (24) angeordnet ist, den Wasserauslass (16) unter einer ersten Bedingung und unter einer zweiten Bedingung, wenn die erste Bedingung nicht erfüllt werden kann, zu öffnen, wobei die erste Bedingung erfüllt ist, wenn das erste Zeitintervall verstrichen ist und ein Wasserpegel in dem Trog (4) an dem oder unterhalb des Niedrigpegel-Sensors (28) ist, und wobei die zweite Bedingung erfüllt ist, wenn das zweite Zeitintervall verstrichen ist.

2. Tiertränke (2) nach Anspruch 1, wobei der Zeitgeber (30) ausgelegt ist, in Verbindung mit dem Verstreichen des ersten Zeitintervalls und/oder des zweiten Zeitintervalls zurückgesetzt zu werden.

3. Tiertränke (2) nach Anspruch 1 oder 2, wobei das Wasserleitungssystem (6) mit einer Einlassdüsenanordnung (10) verbunden ist, umfassend eine erste Düse (12) und zumindest eine zweite Düse (14).

4. Tiertränke (2) nach einem der vorhergehenden Ansprüche, wobei die Auslassventilanordnung (20) einen Ventilkörper (22) und einen Hydraulikzylinder (21) umfasst, welche mit dem Ventilkörper (22) verbunden ist, und das Wasserleitungssystem (6) mit dem Hydraulikzylinder (21) verbunden ist.

5. Tiertränke (2) nach einem der vorhergehenden Ansprüche, wobei der Trog (4) einen Bodenabschnitt (18) umfasst, welcher eine Längsrichtung (40) aufweist, und der Bodenabschnitt (18) mit einer Rippe (42) ausgestattet ist, die von dem Bodenabschnitt (18) hervorsteht, wobei die Rippe (42) in einem mittleren Abschnitt des Bodenabschnitts (18) bereitgestellt ist und sich im Wesentlichen in der Längsrichtung (40) erstreckt.

6. Tiertränke (2) nach Anspruch 5, wobei die Rippe (42) in dem mittleren Abschnitt des Bodenabschnitts (18), gesehen sowohl in der Längsrichtung (40) und quer zur Längsrichtung (40), vorgesehen ist, derart, dass die Rippe (42) von dem Bodenabschnitt (18) vorsteht und an sämtlichen Seiten von dem Bodenabschnitt (18) umgeben ist.

7. Tiertränke (2) nach Anspruch 5 oder 6, wobei der Wasserauslass (16) des Trogs (4) an einem Ende des Bodenabschnitts (18) angeordnet ist, welcher zu dem Wasserauslass (16) hin geneigt ist.

8. Tiertränke (2) nach einem der Ansprüche 5 bis 7, wobei das Wasserleitungssystem (6) mit einer Einlassdüsenanordnung (10) verbunden ist, umfassend eine erste Düse (12), und die erste Düse (12) im Wesentlichen in der Längsrichtung (40) gerichtet ist.

9. Tiertränke (2) nach einem der vorhergehenden Ansprüche, umfassend eine elektrisch aufladbare Einheit (38) und einen elektrischen Generator (36), der mit dem Wasserleitungssystem (6) verbunden ist, wobei der elektrische Generator (36) angeordnet ist, durch Wasser von der Wasserversorgung (8) angetrieben zu werden und die elektrisch aufladbare Einheit (38) aufzuladen.

10. Verfahren zum Steuern einer Tiertränke (2) nach einem der vorhergehenden Ansprüche, wobei das Verfahren umfasst:
Messen (100) eines ersten Zeitintervalls mit dem Zeitgeber (30),
Erfassen (102) eines Wasserpegels mit dem Niedrigpegel-Sensor (28),
Öffnen (104) des Wasserauslasses (16), wenn eine erste Bedingung erfüllt worden ist, wobei unter der ersten Bedingung das erste Zeitintervall verstrichen ist und ein Wasserpegel in dem Trog (4) an dem oder unterhalb des Niedrigpegel-Sensors (28) ist, und wenn die erste Bedingung nicht erfüllt werden kann,
Messen (106) eines zweiten Zeitintervalls mit dem Zeitgeber (30), und
Öffnen (108) des Wasserauslasses (16), wenn eine zweite Bedingung erfüllt worden ist, wobei unter der zweiten Bedingung das zweite Zeitintervall verstrichen ist.

11. Verfahren nach Anspruch 10, umfassend:
Rücksetzen (109) des Zeitgebers (30) in Verbindung mit einem Verstreichen des ersten Zeitintervalls und/oder des zweiten Zeitintervalls.

12. Verfahren nach Anspruch 10 oder 11, angewandt in einer Tiertränke (2), wobei das Wasserleitungssystem (6) mit einer Einlassdüsenanordnung (10) verbunden ist, wobei das Verfahren umfasst:
Offenhalten (110) des Wasserauslasses (16) während eines dritten Zeitintervalls, und Öffnen (112) der Einlassdüsenanordnung (10) während zumindest eines Teils des dritten Zeitintervalls.

13. Verfahren nach einem der Ansprüche 10 bis 12, angewandt in einer Tiertränke (2), wobei das Wasserleitungssystem (6) mit einer Einlassdüsenanordnung (10) verbunden ist, wobei das Verfahren umfasst:
Öffnen (114) der Einlassdüsenanordnung (10), wenn ein Wasserpegel in dem Trog (4) an dem oder unterhalb des Niedrigpegel-Sensors (28) ist.

14. Verfahren nach einem der Ansprüche 10 bis 13, angewandt in einer Tiertränke (2), wobei das Wasserleitungssystem (6) mit einer Einlassdüsenanordnung (10) verbunden ist und das Wasserpegel-Steuerungssystem (24) einen Mittelpegel-Sensor (34) umfasst, der angeordnet ist, einen mittleren Wasserpegel in dem Trog (4) zu erfassen, wobei das Verfahren umfasst:
Öffnen (116) der Einlassdüsenanordnung (10), wenn ein Wasserpegel in dem Trog (4) an dem oder unterhalb des Mittelpegel-Sensors (34) ist.

15. Verfahren nach einem der Ansprüche 10 bis 14, angewandt in einer Tiertränke (2), wobei das Wasserleitungssystem (6) mit einer Einlassdüsenanordnung (10) verbunden ist und das Wasserpegel-Steuerungssystem (24) einen Spitzenpegel-Sensor (32) umfasst, der angeordnet ist, einen Spitzen-Wasserpegel in dem Trog (4) zu erfassen, wobei das Verfahren umfasst:
Schließen (118) der Einlassdüsenanordnung (10), wenn ein Wasserpegel in dem Trog (4) an dem oder oberhalb des Spitzenpegel-Sensors (32) ist.

## Revendications

1. Dispositif d'abreuvement pour animal (2) comprenant une auge (4) destinée à contenir de l'eau, un système de conduite d'eau (6) en communication fluidique avec l'auge (4) et agencé pour être relié à une alimentation en eau (8), une sortie d'eau (16) agencée sur une partie de fond (18) de l'auge (4), un système de vanne de sortie (20) associé à la sortie d'eau (16), et un système de commande du niveau d'eau (24),
**caractérisé en ce que** le système de commande du niveau d'eau (24) comprend un dispositif de commande (26), un minuteur (30) et un détecteur de niveau bas (28) agencé pour détecter un niveau d'eau bas dans l'auge (4), le minuteur (30) étant conçu pour mesurer un premier intervalle de temps et un deuxième intervalle de temps, le système de commande du niveau d'eau (24) étant agencé pour ouvrir la sortie d'eau (16) sous une première condition, et sous une deuxième condition si la première condition n'est pas remplie, la première condition étant remplie lorsque le premier intervalle de temps a expiré et que le niveau d'eau dans l'auge (4) est à la hauteur ou en dessous du détecteur de niveau bas (28), et la deuxième condition étant remplie lorsque le deuxième intervalle de temps a expiré.

2. Dispositif d'abreuvement pour animal (2) selon la revendication 1, dans lequel le minuteur (30) est conçu pour être réinitialisé en fonction de l'expiration du premier intervalle de temps et/ou du deuxième intervalle de temps.

3. Dispositif d'abreuvement pour animal (2) selon la revendication 1 ou 2, dans lequel le système de conduite d'eau (6) est relié à un agencement de tubulures d'entrée (10) comprenant une première tubulure (12) et au moins une deuxième tubulure (14).

4. Dispositif d'abreuvement pour animal (2) selon l'une quelconque des revendications précédentes, dans lequel le système de vanne de sortie (20) comprend un corps de vanne (22) et un vérin hydraulique (21) relié au corps de vanne (22), et le système de conduite d'eau (6) est relié au vérin hydraulique (21).

5. Dispositif d'abreuvement pour animal (2) selon l'une quelconque des revendications précédentes, dans lequel l'auge (4) comprend une partie de fond (18) présentant un sens longitudinal (40), et la partie de fond (18) est pourvue d'une nervure (42) ressortant de la partie de fond (18), la nervure (42) étant prévue dans une partie centrale de la partie de fond (18) et s'étendant sensiblement dans le sens longitudinal (40).

6. Dispositif d'abreuvement pour animal (2) selon la revendication 5, dans lequel la nervure (42) est prévue dans la partie centrale de la partie de fond (18), vu aussi bien dans le sens longitudinal (40) que perpendiculairement au sens longitudinal (40), de manière que la nervure (42) ressort de la partie de fond (18) en étant entourée sur tous les côtés par la partie de fond (18).

7. Dispositif d'abreuvement pour animal (2) selon la revendication 5 ou 6, dans lequel la sortie d'eau (16) de l'auge (4) est agencée à une extrémité de la partie de fond (18) qui est penchée vers la sortie d'eau (16).

8. Dispositif d'abreuvement pour animal (2) selon l'une quelconque des revendications 5 à 7, dans lequel le système de conduite d'eau (6) est relié à un agencement de tubulures d'entrée (10), comprenant une première tubulure (12), et la première tubulure (12) est dirigée sensiblement dans le sens longitudinal (40).

9. Dispositif d'abreuvement pour animal (2) selon l'une quelconque des revendications précédentes, comprenant une unité pouvant être chargée en électricité (38) et un générateur électrique (36) relié au système de conduite d'eau (6), le générateur électrique (36) étant agencé pour être entraîné par de l'eau provenant de l'alimentation en eau (8) et pour charger l'unité pouvant être chargée en électricité (38).

10. Procédé de commande d'un dispositif d'abreuvement pour animal (2) selon l'une quelconque des revendications précédentes, le procédé comprenant :
la mesure (100) d'un premier intervalle de temps au moyen du minuteur (30),
la détection (102) du niveau d'eau au moyen du détecteur de niveau bas (28), l'ouverture (104) de la sortie d'eau (16) si une première condition est remplie, ladite première condition voulant que le premier intervalle de temps ait expiré et que le niveau d'eau dans l'auge (4) soit à la hauteur ou en dessous du détecteur de niveau bas (28), et si la première condition n'est pas remplie :
la mesure (106) d'un deuxième intervalle de temps au moyen du minuteur (30), et
l'ouverture (108) de la sortie d'eau (16) si une deuxième condition est remplie, ladite deuxième condition voulant que le deuxième intervalle de temps ait expiré.

11. Procédé selon la revendication 10, comprenant :
la réinitialisation (109) du minuteur (30) en fonction de l'expiration du premier intervalle de temps et/ou du deuxième intervalle de temps.

12. Procédé selon la revendication 10 ou 11 appliqué à un dispositif d'abreuvement pour animal (2), dans lequel le système de conduite d'eau (6) est relié à un agencement de tubulures d'entrée (10), le procédé comprenant :
la prolongation (110) de l'ouverture de la sortie d'eau (16) pendant un troisième intervalle de temps, et
l'ouverture (112) de l'agencement de tubulures d'entrée (10) pendant au moins une partie du troisième intervalle de temps.

13. Procédé selon l'une quelconque des revendications 10 à 12 appliqué à un dispositif d'abreuvement pour animal (2), dans lequel le système de conduite d'eau (6) est relié à un agencement de tubulures d'entrée (10), le procédé comprenant :
l'ouverture (114) de l'agencement de tubulures d'entrée (10) lorsque le niveau d'eau dans l'auge (4) est à la hauteur ou en dessous du détecteur de niveau bas (28).

14. Procédé selon l'une quelconque des revendications 10 à 13 appliqué à un dispositif d'abreuvement pour animal (2), dans lequel le système de conduite d'eau (6) est relié à un agencement de tubulures d'entrée (10) et le système de commande du niveau d'eau (24) comprend un détecteur de niveau moyen (34) agencé pour détecter un niveau d'eau moyen dans l'auge (4), le procédé comprenant :
l'ouverture (116) de l'agencement de tubulures d'entrée (10) lorsque le niveau d'eau dans l'auge (4) est à la hauteur ou en dessous du détecteur de niveau moyen (34).

15. Procédé selon l'une quelconque des revendications 10 à 14 appliqué à un dispositif d'abreuvement pour animal (2), dans lequel le système de conduite d'eau (6) est relié à un agencement de tubulures d'entrée (10) et le système de commande du niveau d'eau (24) comprend un détecteur de niveau haut (32) agencé pour détecter un niveau haut d'eau dans l'auge (4), le procédé comprenant :
la fermeture (118) de l'agencement de tubulures d'entrée (10) lorsque le niveau d'eau dans l'auge (4) est à la hauteur ou au-dessus du détecteur de niveau haut (32).
